# EUROPEAN PATENT APPLICATION

(11) **EP 4 075 677 A1**
(43) Date of publication of application: **19.10.2022**
(21) Application number: 22167014.4
(22) Date of filing: 06.04.2022
(51) Int. Cl.: H04B 1/40, H01Q 1/24

(54) **A CONNECTION DEVICE AND A BASE STATION ANTENNA**

(30) Priority: 15.04.2021 CN 202110402873
(71) Applicant: CommScope Technologies LLC, Hickory, NC 28602 (US)
(72) Inventor: LIU, Nengbin, Suzhou, 215021 (CN); WANG, Xiaotuo, Suzhou, 215021 (CN); TANG, PuLiang, Suzhou, 215021 (CN); SU, Ruixin, Suzhou, 215021 (CN); DI, Keyun, Suzhou, 215021 (CN)
(74) Representative: Parker, Andrew James

(57) **Abstract**

A connection device comprises a first interface assembly that is removably connected to a first pre-determined number of first ports of a first radiating element array in an antenna assembly of the base station antenna, a second interface assembly that is connected to a second pre-determined number of second ports of a remote radio head of the base station antenna, and a connection circuit, the connection circuit being connected between the first interface assembly and the second interface assembly so that the first radiating element array and the remote radio head are electrically connected.

## Description

### CROSS-REFERENCE TO RELATED APPLICATION

The present application claims priority to Chinese Patent Application No. 202110402873.5, filed April 15, 2021, the entire content of which is incorporated herein by reference as if set forth fully herein.

### FIELD

The present disclosure relates to the field of communication technology, and specifically a to connection device and to a base station antenna including such a connection device.

### BACKGROUND

As communication technology develops, base station antennas are now being deployed that include an active module that is integrated with a passive module. A passive module refers to a portion of the base station antenna that includes one or more arrays of radiating elements that are connected to one or more external radios. These passive arrays of radiating elements do not perform active beamforming. The active module refers to a portion of the base station antenna that has one or more arrays of radiating elements that may perform active beamforming (e.g., changing the shape of the generated antenna beams on a time slot-by-time slot basis). Unfortunately, current structures and methods for integrating an active module with a passive module have certain disadvantages in terms of electrical performance, mechanical structures, and integration costs. For example, the integration of an active module and a passive module may result in poor antenna performance in one or more frequency bands and poor stability of a base station antenna, and it is inconvenient to add more radiation elements in a base station antenna and to switch to an active module. Thus, it is desirable to improve the technology of integration of an active module and a passive module.

### SUMMARY

According to a first aspect of the present disclosure, a connection device for a base station antenna is provided, and the connection device comprises a first interface assembly, the first interface assembly being removably connected to a first pre-determined number of first ports of a first radiating element array in an antenna assembly of the base station antenna; a second interface assembly, the second interface assembly being connected to a second pre-determined number of second ports of a remote radio head of the base station antenna, and a connection circuit, the connection circuit being connected between the first interface assembly and the second interface assembly so that the first radiating element array and the remote radio head are electrically connected.

According to a second aspect of the present disclosure, a base station antenna is provided; the base station antenna comprises an antenna assembly that comprises a first radiating element array and a second radiating element array, where the first radiating element array comprises a first pre-determined number of first ports, a remote radio head; the remote radio head is electrically connected to the first radiating element array, and is not electrically connected to the second radiating element, and a connection device as stated above.

### BRIEF DESCRIPTION OF THE DRAWING

FIG. 1 is a schematic front view of a base station antenna having an active module integrated with a passive module.
FIG. 2 is a schematic side view of the base antenna in FIG. 1.
FIG. 3 is a schematic perspective view of a base station antenna with another integration of an active module and a passive module.
FIG. 4 is a schematic perspective view of the base station antenna of FIG. 3 when the active module and the passive module are separated from each other.
FIG. 5 is a schematic perspective view of a base station antenna according to another embodiment of the present disclosure.
FIG. 6 is an exploded perspective view of the base station antenna in FIG. 5.
FIG. 7 is a schematic front of an antenna assembly in the base station antenna in FIG. 5.
FIG. 8 is a schematic block diagram of certain connections in a base station antenna according to a specific embodiment of the present disclosure.
FIG. 9 is a schematic block diagram of certain connections in a base station antenna according to another specific embodiment of the present disclosure.
FIG. 10 is a schematic block diagram of certain connections in a base station antenna according to yet another specific embodiment of the present disclosure.

In the embodiments described below, under some circumstances, the same signs are used among different drawings to indicate the same parts or parts with the similar functions, and repeated description is thus omitted. Under some circumstances, similar labels and letters are used to indicate similar items, and thus, once a certain item is defined in one attached drawing, it does not need to be further discussed in subsequent attached drawings.

For ease of understanding, the positions, dimensions, and ranges of various structures shown in the attached drawings and the like may not indicate the actual positions, dimensions, and ranges under some circumstances. Thus, the present disclosure is not limited to the positions, dimensions, and ranges disclosed in the attached drawings and the like.

### DETAILED DESCRIPTION

Various exemplary embodiments of the present disclosure will be described in detail below by referencing the attached drawings. It should be noted: unless otherwise specifically stated, the relative arrangement, numerical expressions and numerical values of components and steps set forth in these embodiments do not limit the scope of the present disclosure.

The following description of at least one exemplary embodiment is actually only illustrative, and in no way serves as a limitation to the present disclosure and its application or use. In other words, the structures and methods discussed in the present disclosure are shown in an exemplary manner to illustrate different embodiments according to the present disclosure. Those of ordinary skill in the art should understand that these examples are merely illustrative, but not in an exhaustive manner, to indicate the embodiments of the present disclosure. In addition, the drawings are not necessarily drawn to scale, and some features may be enlarged to show details of some specific components.

The technologies, methods, and equipment known to those of ordinary skill in the art may not be discussed in detail, but when appropriate, said technologies, methods, and equipment should be regarded as a part of the specification.

In all examples shown and discussed herein, any specific value should be construed as merely exemplary, but not limitative. Thus, other examples of the exemplary embodiment may have different values.

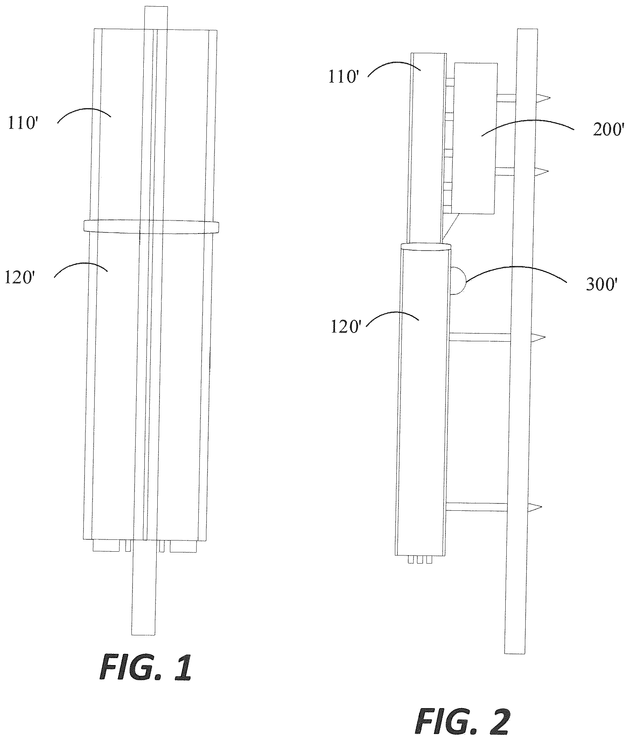

Some base station antennas may include both an active module and a passive module. The active module and the passive module may be separate assemblies that are mounted together, or may be a single assembly in which, for example, the active module is installed into the passive module. FIG. 1 and FIG. 2 show an example base station antenna having separate active and passive modules that are mounted together. In an upper antenna assembly 110', first radiating elements may be arranged. The first radiating elements may be a part of an active module and are electrically connected to a active radio 200' located at an upper part of a base station antenna, for communication in, for example, the 2.6-3.5 GHz frequency band or a portion thereof. Optionally, second radiating elements may be included in the upper antenna assembly 110' that may be a part of a passive module. The second radiating elements are not electrically connected to the active radio 200', but may be connected to a remote radio head or ground-based radio (not shown). The second radiating elements may be configured for communication in, for example, the 694-960 MHz frequency band or a portion thereof. In a lower antenna assembly 120', additional radiating elements may be arranged, which are a part of a passive module and are used for the communication in the 694-960 MHz frequency band or a portion thereof. The second radiating elements, which may be located in the upper antenna assembly 110' and the lower antenna assembly 120', may be connected to each other via jumper cables 300 to form a complete radiating element array, and they are centrally provided a stimulus signal. It will be appreciated that the upper antenna assembly 110' and/or the lower antenna assembly 120' may include additional radiating elements such as, for example, third radiating elements that are configured to operate in the 1427-2690 MHz frequency band or a portion thereof.

When the upper antenna assembly 110' and the lower antenna assembly 120' are separate assemblies, there is often usually a gap therebetween (e.g., a gap of 10mm or more). If some of the second radiating elements of the passive module are included in the upper antenna assembly 110', the performance of the array of second radiating elements may be reduced in terms of return loss, isolation, and/or passive intermodulation.

Moreover, when a passive module matches a different active module, the stability of the performance of the passive module is also poor; for example, the electrical fast transient burst (FTB) immunity of the passive module at 0.69 GHz may only be -17 dB. Moreover, the time and effort required to remove and replace the active module may be significant.

Furthermore, due to space constraints in the base station antenna, it may be extremely difficult if it is required to further integrate other radiating elements for communication in, for example, the 1427-2690 MHz or a portion thereof. Because it may require more jump cables to realize the connection among relevant radiating elements along with the increase of other radiating elements, this will result in an increase in the cost of the antenna.

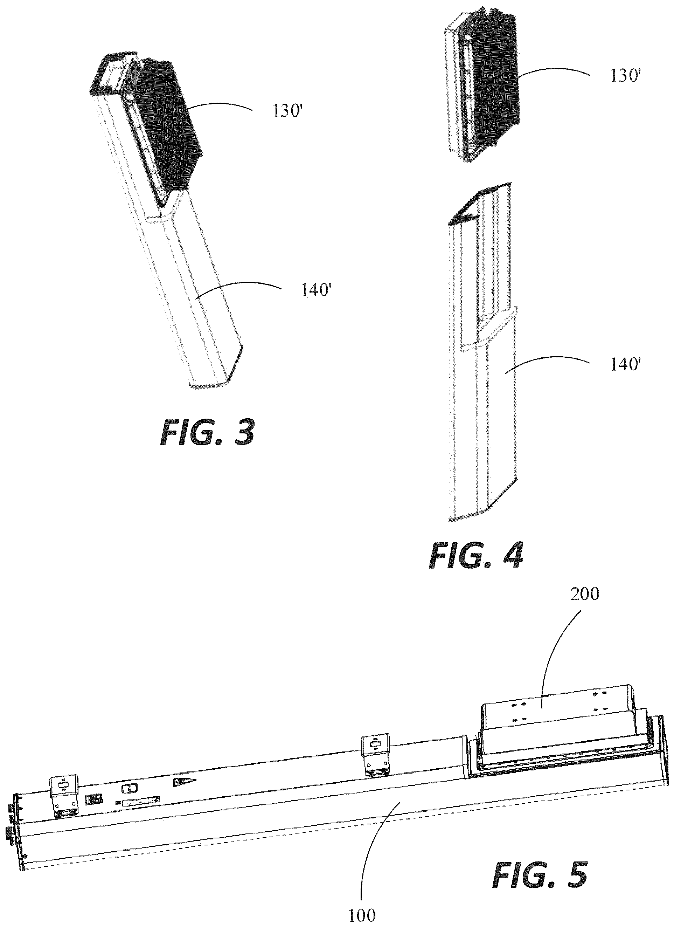

In another base station antenna, an active module 130' may be integrated into a passive module 140'. FIG. 3 and FIG. 4 show such an arrangement. The active module 130' (comprising corresponding radiating elements and a active radio that is electrically connected to these radiating elements) are inserted as an integrated unit into the passive module 140'.

However, in such base station antenna, when the active module 130' has to be replaced, it still requires significant time and effort for removal and installation, which results in an increase in the replacement cost.

Furthermore, due to the space constraint in the base station antenna, it is also difficult to add other radiating elements to the base station antenna. Along with the increase of other radiating elements, it is also possible that more jump cables are required to realize the connection, which results in an increase of the antenna cost.

In another base station antenna, an active module and a passive module may also be directly integrated. Specifically, a base station antenna may comprise a reflection device (for example, a reflection plate); radiating elements of an active module and radiating elements of a passive module may be jointly arranged on one side of the reflection device; a active radio may be electrically connected to radiating elements of the active module to provide corresponding signals.

However, in such a directly integrated base station antenna, the structure of the active module along with its performance is fixed, and it is very difficult to replace a different active module to match a passive module as needed, which results in very limited flexibility.

To resolve aforementioned issues, the present disclosure provides a connection device for a base station antenna. In an exemplary embodiment of the present disclosure, an antenna assembly and a active radio in a base station antenna may be connected by a removable connection device. When it is necessary to change an active module in a base station antenna, the original connection device along with the active radio may be conveniently removed, and another connection device along with the corresponding active radio are installed. While ensuring the performance of a base station antenna, the technical solution of the present disclosure makes the integration of an active module and a passive module in a base station antenna simpler, increase the flexibility and reducing the cost of a base station antenna.

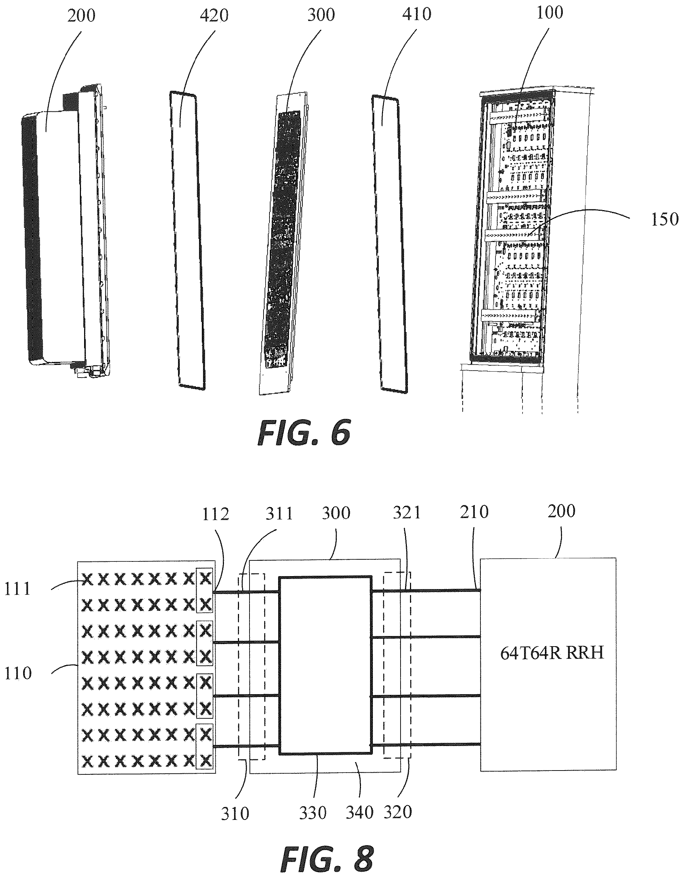

In an exemplary embodiment of the present disclosure, as shown in FIG. 5 and FIG. 6, a base station antenna may comprise an antenna assembly 100, a active radio 200, and a connection device 300.

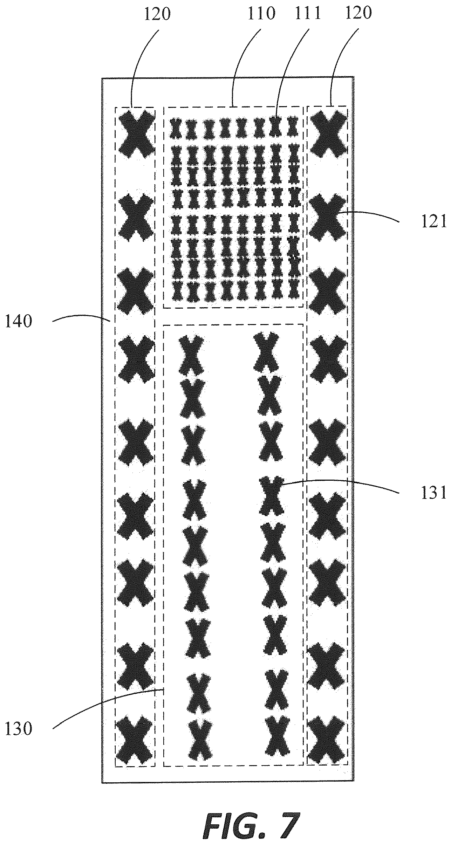

As shown in FIG. 7, the antenna assembly 100 may comprise a first radiating element array 110 and one or more second radiating element arrays 120. The first radiating element array 110 may comprise a plurality of first radiating elements 111 arranged in a rectangular array. Similarly, each second radiating element array 120 may comprise a plurality of second radiating elements 121 arranged in a rectangular array. Under some circumstances, an antenna assembly 100 may also comprise more radiating element arrays, for example, a third radiating element array 130 comprising a plurality of third radiating elements 131 arranged in a rectangular array as shown in FIG. 7. Different radiating element arrays may be arranged to be interspersed with each other, to sufficiently utilize the space in the antenna assembly 100. For example, in the antenna assembly 100 shown in FIG. 7, the first radiating element array 110 may be arranged to be in between two second radiating element arrays 120. Similarly, a third radiating element array 130 may also be arranged to be in between the two second radiating element arrays 120. It can be understood that different radiating element arrays in an antenna assembly 100 may be arranged in other formats, which are not repeated herein.

As shown in FIG. 7, the antenna assembly 100 further comprises a reflection device 140. The first radiating element array 110 and the second radiating element array 120 may be on a first (front) face of a reflection device 140; an active radio 200 may be set on a second (back) face of the reflection device 140 opposite to the first face. For example, in FIG. 7, the first radiating element array 110 may be arranged to be in a first area (located at the top half of a reflection device 140) on the first face of the reflection device 140, and the second radiating element array 120 may be arranged to be in a first area and a second area (namely the first and second sides of a reflection device 140) on the first face of the reflection device 140. Moreover, as shown in FIG. 7, if other radiating element arrays, such as a third radiating element array 130, are further set in an antenna assembly 100, such radiating element arrays may also be mounted on the first face of the reflection device 140 and occupy other empty areas on the first face of the reflection device 140.

In some embodiments, the reflection device 140 may be a reflection plate, which changes the directions of certain signals radiated by the radiating elements; for example, a portion of a signal emitted by a radiating element that is radiated backwardly is reflected forward by the reflection plate 140, which improves the performance of the base station antenna. Furthermore, since various types of radiating element arrays can also be mounted on a reflection device 140 in the overall arrangement, it is not necessary to provide a gap between an upper antenna assembly and a lower antenna assembly as in the case of the base station antenna of FIGS. 1-2; thus, the leak of signals radiated by radiating elements backward from the gap can be prevented, which can improve the performance of the radiating element arrays.

As shown in FIGS. 8 to 10, the first radiating element array 110 may include a first pre-determined number of first ports 112. In some embodiments, the number of first ports 112 may be equal to the total number of first radiating elements 111 in a first radiating element array 110; in other embodiments, the number of first ports 112 may be smaller than the total number of first radiating elements 111 in the first radiating element array 110. For examples, at least two first radiating elements 111 in the first radiating element array 110 may be connected to a same first port 112. In some embodiments, the first radiating elements 111 that are connected to the same first port 112 may be located in the same column in the first radiating element array 110. In a specific example shown in FIGS. 8 to 10, pairs of first radiating elements 111 that are located in the same column in the first radiating element array 110 are connected to respective first ports 112 (note that in FIGS 8-10 only the connections between the connection device 300 and the rightmost column of the first radiating element array are shown; the same connections, while not shown, are repeated for each additional column in the first radiating element array 110). Accordingly, for each polarization, the first pre-determined number of first ports 112 is half of the total number of first radiating elements 111 in the first radiating element array 110. It can be understood that the number of first radiating elements 111 connected to the same first port 112 may be three, four, or more in other embodiments. It will also be understood that in other embodiments, some first ports 112 may connect to different numbers of first radiating elements (e.g., a first port 112 may be connected to the top three first radiating elements 111 in a column of the first radiating element array 110, a second first port 112 may be connected to the middle two first radiating elements 111 in the column of the first radiating element array 110, and a third first port 112 may be connected to the bottom three first radiating elements 111 in the column of the first radiating element array 110 in another example embodiment).

Referring back to FIGS. 5 to 7, an active radio 200 may be electrically connected to the first radiating element array 110 of the antenna assembly 100. Thus, the active radio 200 and the first radiating element array 110 jointly form an active module of a base station antenna, and the active module can be used for 5G communication, as an example. Moreover, a remote radio head is electrically connected to a second radiating element array 120. Thus, the second radiating element array 120 may form a passive module of the base station antenna, and the passive module may be used for 4G communication, as an example. Moreover, a third radiating element array 130, as an example, may also be added in the active module and/or in the passive module as needed to realize communication in additional frequency bands.

In the first radiating element array 110, the total number of first radiating elements 111 may be greater than or equal to the maximum number of radiating elements, to which the active radio 200 can be connected. Moreover, the first radiating element array 110 may adapt to various types of replaceable active radios 200 by changing the number of first radiating elements 111 connected to the active radio 200 or by changing the connection among first radiating elements 111 in a first radiating element array 110. Thus, an active module may be replaced by replacing the active radio 200 and a corresponding connection device 300, without making changes to the first radiating element array 110, which makes the switch between active modules simpler.

As shown in FIGS. 8 to 10, a connection device 300 may comprise a first interface assembly 310, a second interface assembly 320, and a connection circuit 330.

A first interface assembly 310 is removably connected to a first pre-determined number of first ports 112 of the first radiating element array 110 in antenna assembly 100; thus a connection device 300 along with the active radio 200 may be separated from the antenna assembly 100, which makes it convenient to replace the active radio 200.

A second interface assembly 320 may be connected to a second pre-determined number of second ports 210 of the active radio 200, which thus enables the connection between a connection device 300 and the active radio 200. Furthermore, in some embodiments, the connection device 300 may be connected to the active radio 200 in an irremovable manner; thus, when the active radio 200 of an active module is replaced, there is always a matching connection device 300, and it is unnecessary to look for a suitable connection device 300 separately. In some other embodiments, a second interface assembly 320 of the connection device 300 may also be removably connected to a second pre-determined number of second ports 210 of the active radio 200. Thus, a same connection device 300 may also be used different base station antennas, which is beneficial for improving the flexibility of selecting various components in a base station antenna, making full use of various components, and reducing costs.

As shown in FIGS. 8 to 10, in some embodiments, a first interface assembly 310 may comprise a first pre-determined number of third ports 311, and the third ports 311 may be connected to the first ports 112 in a one-to-one manner (i.e., each third port 311 is connected to a respective one of the first ports 112). Similarly, a second interface assembly 320 may comprise a second pre-determined number of fourth ports 321, and the fourth ports 321 may also be connected to the second ports 210 in a one-to-one manner.

In some other embodiments, it is also acceptable that the number of third ports 311 of a first interface assembly 310 is not equal to the number of first ports 112 and/or the number of fourth ports 321 of a second interface assembly 320 is not equal to the number of second ports 210; under such circumstance, corresponding first ports 112 and third ports 311 may be connected selectively, and/or corresponding second ports 210 and fourth ports 321 may be connected selectively, to realize the expected signal transmission and thus to change an active module in a base station antenna. Ports that are not connected to other ports may be left vacant or be connected with a preset load.

The connection circuit 330 may be connected between the first interface assembly 310 and the second interface assembly 320 so that the first radiating element array 110 is electrically connected to the active radio 200.

In some embodiments, the connection device 300 may also comprise a substrate 340, and the connection circuit 330 may be configured on the substrate 340 by printed circuit board technology, as an example. The connection circuit 330 may comprise a calibration circuit, that is, a connection device 300 may also function as a calibration device, and thus existing components in a base station antenna are thoroughly utilized to realize the integration of the active module and the passive module, avoid introducing additional components in a base station antenna, and help reduce the cost of a base station antenna.

In a specific example shown in FIG. 8, the antenna assembly 100 comprises a first radiating element array 110 having 64 first radiating elements 111 that are arranged for 64T64R communication, and the first radiating element array 110 matches an active radio 200 for 64T64R communication; the first radiating element array 110, the connection device 300 and the active radio 200jointly form a 64T64R active module. The first radiating element array 110 comprises first radiating elements 111 arranged as an 8x8 array; every first radiating element 111 may comprise two dipoles arranged in cross polarization, and every two first radiating elements 111 share (i.e., are commonly connected to) one first port 112. Hereinafter, the specific configuration of a base station will be discussed targeting a polarization direction, while the configuration along another polarization direction may be arranged by referencing the discussion. As shown in FIG. 8, the first pre-determined number and the second pre-determined number may be the same, both being 32. Under such circumstance, a connection circuit 330 may connect third ports 311 in a first interface assembly 310 and fourth ports 321 in a second interface assembly 320 one-to-one, which thus realizes the electrical connection between the active radio 200 and the first radiating element array 110 to form an active module of the base station antenna.

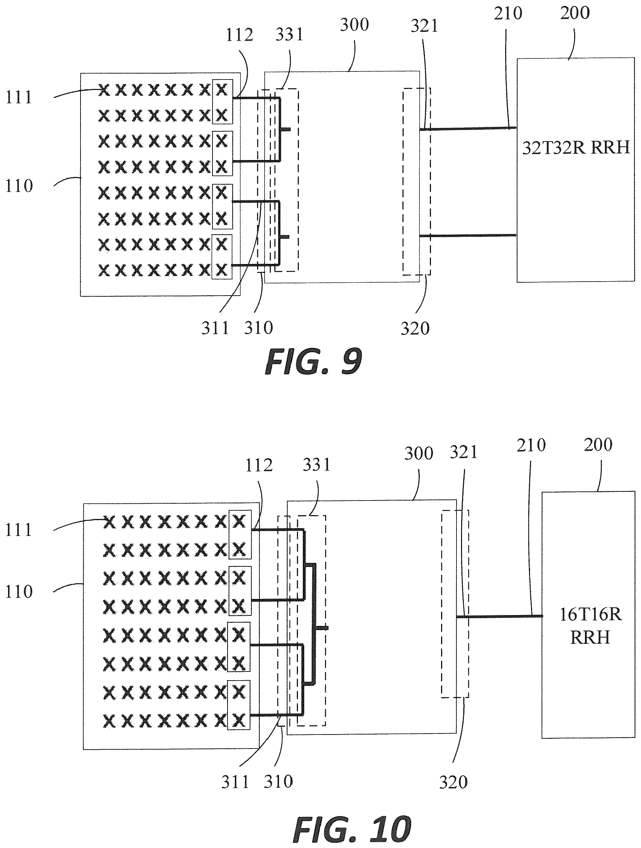

As shown in FIG. 9 and FIG. 10, in other specific examples, connection circuits 330 may comprise a power divider circuit 331 that is connected between the first pre-determined number of third ports 311 and the second pre-determined number of fourth ports 321; thus, when a first pre-determined number is not equal to a second pre-determined number, the power divider circuit 331 allows matching different numbers of ports to each other, and a signal from the active radio 200 is transmitted to a corresponding first port 112 of a first radiating element array 110 according to an expected method.

In the specific example shown in FIG. 9, the first radiating element array 110 is connected to a 32T32R active radio 200 to form a 32T32R active module. Provided that the first pre-determined number is twice the second pre-determined number, i.e., the first pre-determined number is 32 and the second pre-determined number is 16, the power divider circuit 331 may comprise a second pre-determined number of one-to-two power dividers. Every one-to-two power divider connects a fourth port 210 to two third ports 311. Thus, provided that the first radiating element array 110 remains unchanged, the 32T32R active radio 200 can be made to match the first radiating element array 110. For each polarization, every two first radiating elements 111 are connected to a same first port 112, and every two first ports 112 are connected to a same third port 311; that is to say, four first radiating elements 111 are connected to each third port 311. By including a power divider circuit 331 in the connection device 300, on one hand, it realizes the matching between different port numbers; on the other hand, it is also beneficial for enhancing the radiating strength of an active module, which thus improves the performance of the base station antenna.

In the specific example shown in FIG. 10, the first radiating element array 110 is connected to a 16T16R active radio 200 to form a 16T16R active module. Provided that the first pre-determined number is four times the second pre-determined number, i.e., the first pre-determined number is 32 and the second pre-determined number is 8, the power divider circuit 331 may comprise the second pre-determined number of one-to-four power dividers. Every one-to-four power divider connects a fourth port 210 to four third ports 311. Thus, provided that the first radiating element array 110 remains unchanged, a 16T16R active radio 200 can be made to match the first radiating element array 110. For each polarization, every two first radiating elements 111 are connected to the same first port 112, and every four first ports 112 are connected to the same third port 311; that is to say, every eight first radiating elements 111 are connected to the same third port 311. By including a power divider circuit 331 in the connection device 300, on one hand, it realizes the matching between different port numbers; on the other hand, it is also beneficial for enhancing the radiating strength of the active module, which thus improves the performance of the base station antenna.

As shown in FIG. 10, every one-to-four power divider may comprise one first one-to-two power divider and two second one-to-two power dividers; two input ports of a second one-to-two power divider are connected to two output ports of a first one-to-two power divider. That is to say, a one-to-four power divider may be formed using three one-to-two power dividers.

It can be understood that in other embodiments, the first pre-determined number may also be eight times or 16 times the second pre-determined number, and a one-to-eight power divider and a one-to-16 power divider may be configured in a connection device accordingly; moreover, a one-to-eight power divider and a one-to-16 power divider can be formed by a certain number of one-to-two power dividers or one-to-four power dividers.

As seen from specific examples in FIGS. 8 to 10, the total number of first radiating elements 111 in the first radiating element array 110 may be greater than or equal to the maximum number of radiating elements to which the active radio 200 can be connected. Thus, an antenna assembly 100 with a sufficient number of first radiating elements 111 may be provided to a customer; however, during the process of the replacement of an active module, an antenna assembly 100 itself may remain the same, and it may only be necessary to replace the active radio 200 and the corresponding connection device 300. Although providing more radiating elements 111 than are required for a particular active radio may result in a cost increase, this increase may still be small compared to the cost to replace the entirety of an active module in a traditional method.

Moreover, in some embodiments, when there are excessive first radiating elements 111 in an antenna assembly 100, it is also acceptable that these first radiating elements 111 are not connected to other components so that a first radiating element array 110 can match the active radio 200.

As shown in FIG. 6, a base station antenna may also comprise an electromagnetic seal 400; an electromagnetic seal 400 may be configured to seal at least the circuit portion of the connection device 300 to prevent the connection device 300 from damage from electromagnetic radiation, moisture, and dust.

As shown in an embodiment in FIG. 6, the electromagnetic seal 400 may comprise a first electromagnetic seal 410 and a second electromagnetic seal 420 that may be removably joined together. Provided that the first electromagnetic seal 410 and the second electromagnetic seal 420 are joined, a housing cavity, which is located between the first electromagnetic seal 410 and the second electromagnetic seal 420 to house at least the circuit portion of the connection device 300, is formed. When the connection device 300 has to be replaced, the first electromagnetic seal 410 may be removed from the second electromagnetic seal 420, which may realize the reuse of an electromagnetic seal 400 and thus help reduce its cost.

In order to further strengthen the connection between an antenna assembly 100, a connection device 300, and an active radio 200, the antenna assembly 100 may also comprise a first connector, and the connection device 300 may also comprise a third connector connected to the first connector so that the connection device 300 is removably connected to the antenna assembly 100. Similarly, the active radio 200 may also comprise a second connector, and the connection device 300 may also comprise a fourth connector connected to the second connector so that the connection device 300 is removably connected to the active radio 200. As shown in FIG. 6, in some embodiments, at least one of a first connector, a second connector, a third connector, and a four connector may be a push-pull connector 150.

In a base station antenna of the present disclosure, the connection between an antenna assembly 100 and an active radio 200 is realized by a connection device 300 so that the integration of an active module and a passive module in a base station antenna is simple and convenient, which helps reduce the integration cost. When the active module has to be replaced, it is only necessary to replace the active radio 200 and the corresponding connection device 300, while there is no significant modification to the antenna assembly 100 itself, which thus helps improve the flexibility of the base station antenna. Since the antenna assembly 100 is configured relatively independently and there is basically no modification involving the antenna assembly 100 itself during the replacement process, thus, enough space may be reserved in the antenna assembly 100 to configure expected radiating elements to realize communication in a plurality of frequency bands; moreover, it is also beneficial to improve the communication quality and reliability when more radiating elements are added.

In addition, the embodiments of the present disclosure may further include the following examples:
1. A connection device for a base station antenna; the connection device comprises a first interface assembly, the first interface assembly being removably connected to a first pre-determined number of first ports of a first radiating element array in an antenna assembly of the base station antenna; a second interface assembly, the second interface assembly being connected to a second pre-determined number of second ports of a remote radio head of the base station antenna; and a connection circuit, the connection circuit being connected between the first interface assembly and the second interface assembly so that the first radiating element array and the remote radio head are electrically connected.
2. A connection device as described in 1; the second interface assembly is removably connected to a second pre-determined number of second ports of the remote radio head.
3. A connection device as described in 1; the first interface assembly comprises a first pre-determined number of third ports, and a third port and a first port are connected one to one; and the second interface assembly comprises a second pre-determined number of fourth ports, and a four port and a second port are connected one to one.
4. A connection device as described in 3, the connection circuit comprises: a power divider circuit, the power divider circuit being connected between a first pre-determined number of third ports and a second pre-determined number of fourth ports.
5. A connection device as described in 4; provided that a first pre-determined number is twice of a second pre-determined number, the power divider circuit comprises a second pre-determined number of one-to-two power dividers; every one-to-two power divider connects a fourth port to two third ports corresponding to the fourth port.
6. A connection device as described in 4; provided that a first pre-determined number is four times of a second pre-determined number, the power divider circuit comprises a second pre-determined number of one-to-four power dividers; every one-to-four power divider connects a fourth port to four third ports corresponding to the fourth port.
7. A connection device as described in 6; every one-to-four power divider comprises a first one-to-two power divider and two second one-to-two power dividers; wherein the input ports of two second one-to-two power divider are connected to two output ports of the first one-to-two power divider respectively.
8. A connection device as described in any one of 1 to 7; the connection device further comprises a substrate; the connection circuit is set on the substrate, and the connection circuit further comprises a calibration circuit.
9. A base station antenna; the base station antenna comprises an antenna assembly that includes a first radiating element array and a second radiating element array, where the first radiating element array comprises a first pre-determined number of first ports; a remote radio head that is electrically connected with the first radiating element array and is not electrically connected with the second radiating element; and a connection device as described in any one of 1 to 8.
10. A base station antenna as described in 9; the total number of a first radiating elements in the first radiating element array is greater than or equal to the maximum number of radiating elements, to which the remote radio head can be connected.
11. A base station antenna as described in 9; the antenna assembly further comprises a reflection device; wherein, the first radiating element array and the second radiating element array are set on a first side of the reflecting device, and the remote radio head is set on a second side of the reflection device opposite to the first side.
12. A base station antenna as described in 11; the first radiating element array is arranged in a first area on a first side of the reflection device; and the second radiating element array is arranged in a first area and a second area on a first side of the reflection device.
13. A base station antenna as described in 9; the base station antenna further comprises an electromagnetic seal; the electromagnetic seal is configured to seal at least the circuit portion of the connection device.
14. A base station antenna as described in 13; the electromagnetic seal comprises a first electromagnetic seal and a second electromagnetic seal removably joined together; provided that the first electromagnetic seal and the second electromagnetic seal are joined, a housing cavity, which is located between the first electromagnetic seal and the second electromagnetic seal to house at least the circuit portion of a connection device, is formed.
15. A base station antenna as described in 9; at least two first radiating elements in the first radiating element array are connected to a same first port.
16. A base station antenna as described in 15; a plurality of first radiating elements connected to a same first port are located on a same row of the first radiating element array.
17. A base station antenna as described in 9; the antenna assembly also comprises a first connector, and the connection device also comprises a third connector connected to the first connector so that the connection device is removably connected to the antenna assembly.
18. A base station antenna as described in 9; the remote radio head also comprises a second connector, and the connection device also comprises a fourth connector connected to the second connector so that the connection device is removably connected to the remote radio head.
19. A base station antenna as described in 17 or 18; at least one of a first connector, a second connector, a third connector, and a four connector is a push-pull connector.
20. A base station antenna as describe in 9; an active module comprising the first radiating element array and the remote radio head is configured for 5G communication, and a passive module comprising the second radiating element array is configured for 4G communication.

As used herein, the words "front", "rear", "top", "bottom", "above", "below", etc., if present, are used for descriptive purposes and are not necessarily used to describe constant relative positions. It should be understood that the terms used in this way are interchangeable under appropriate circumstances, so that the embodiments of the present disclosure described herein, for example, can be operated on other orientations that differ from those orientations shown herein or otherwise described.

As used herein, the word "exemplary" means "serving as an example, instance, or illustration" rather than as a "model" to be copied exactly. Any realization method described exemplarily herein is not necessarily interpreted as being preferable or advantageous over other realization methods. Furthermore, the present disclosure is not limited by any expressed or implied theory stated in the above technical field, background art, summary, or specific embodiments.

As used herein, the word "basically" means any minor changes including those caused by design or manufacturing defects, device or component tolerances, environmental influences, and/or other factors. The word "basically" also allows for the divergence from the perfect or ideal situation due to parasitic effects, noise, and other practical considerations that may be present in the actual realization.

In addition, the above description may have mentioned elements or nodes or features that are "connected" or "coupled" together. As used herein, unless explicitly stated otherwise, "connect" means that an element/node/feature is electrically, mechanically, logically, or in other manners connected (or communicated) with another element/node/feature. Similarly, unless explicitly stated otherwise, "couple" means that one element/node/feature can be mechanically, electrically, logically, or in other manners linked with another element/node/feature in a direct or indirect manner to allow for interaction, even though the two features may not be directly connected. That is, "couple" is intended to comprise direct and indirect linking of elements or other features, including connection using one or a plurality of intermediate components.

In addition, for reference purposes only, "first", "second" and similar terms may also be used herein, and thus are not intended to be limitative. For example, unless the context clearly indicates, the words "first", "second" and other such numerical words involving structures or elements do not imply a sequence or order.

It should also be noted that, as used herein, the words "include/comprise", "contain", "have", and any other variations indicate that the mentioned features, entireties, steps, operations, elements and/or components are present, but do not exclude the presence or addition of one or a plurality of other features, entireties, steps, operations, elements, components and/or combinations thereof.

In the present disclosure, the term "provide" is used in a broad sense to cover all the ways of obtaining an object, and thus "providing an object" includes but is not limited to "purchase", "preparation/manufacturing", "arrangement/setting", "mounting/assembly", and/or "order" of the object, etc.

Those of ordinary skill in the art should also realize that the boundaries between the above operations are merely illustrative. A plurality of operations can be combined into a single operation, which may be distributed in additional operations, and the operations can be executed at least partially overlapping in time. Moreover, alternative embodiments may include a plurality of instances of specific operations, and the order of operations may be changed in various other embodiments. However, other modifications, changes, and substitutions are also possible. Therefore, the Specification and attached drawings hereof should be regarded as illustrative rather than limitative.

Although some specific embodiments of the present disclosure have been described in detail through examples, those of ordinary skill in the art should understand that the above examples are only for illustration rather than for limiting the scope of the present disclosure. The embodiments disclosed herein can be combined arbitrarily provided that the combination does not depart from the spirit and scope of the present disclosure. Those of ordinary skill in the art should also understand that various modifications can be made to the embodiments above, provided that they do not depart from the scope and spirit of the present disclosure. The scope of the present disclosure is defined by the attached claims.

## Claims

1. A connection device for a base station antenna comprises:
a first interface assembly that is removably connected to a first pre-determined number of first ports of a first radiating element array in an antenna assembly of the base station antenna;
a second interface assembly that is connected to a second pre-determined number of second ports of an active radio of the base station antenna; and
a connection circuit that is connected between the first interface assembly and the second interface assembly so that the first radiating element array and the active radio are electrically connected.

2. A connection device as described in Claim 1, wherein the second interface assembly is removably connected to the second ports of the active radio.

3. A connection device as described in either Claim 1 or Claim 2, wherein the first interface assembly comprises a first pre-determined number of third ports, and the third ports and the first ports are connected in a one-to-one manner; and
the second interface assembly comprises a second pre-determined number of fourth ports, and the fourth ports and the second ports are connected in a one-to-one manner.

4. A connection device as described in Claim 3, wherein the connection circuit comprises a power divider circuit that is connected between the first pre-determined number of third ports and the second pre-determined number of fourth ports.

5. A connection device as described in Claim 4, wherein the first pre-determined number is either:
a) twice the second pre-determined number and the power divider circuit comprises a second pre-determined number of one-to-two power dividers, where each one-to-two power divider connects a fourth port to a respective pair of third ports, or
b) four times the second pre-determined number and the power divided circuit comprises a second pre-determined number of one-to-four power dividers, where each one-to-four power divider connects a fourth port to a respective set of four of the third ports.

6. A connection device as described in Claim 5 option b), wherein every one-to-four power divider comprises a first one-to-two power divider and two second one-to-two power dividers; wherein the input ports of the two second one-to-two power divider are connected to the respective two output ports of the first one-to-two power divider.

7. A connection device as described in any one of Claims 1 to 6, wherein the connection device further comprises a substrate; the connection circuit is formed in and/or on the substrate, and the connection circuit further comprises a calibration circuit.

8. A base station antenna, wherein the base station antenna includes:
an antenna assembly that comprises the first radiating element array and a second radiating element array;
the active radio, where the active radio is electrically connected to the first radiating element array, and is not electrically connected to the second radiating element; and
a connection device as described in any one of Claims 1 to 7.

9. A base station antenna as described in Claim 8, wherein the total number of first radiating elements in the first radiating element array is greater than or equal to number of first polarization second ports of the active radio.

10. A base station antenna as described in either Claim 8 or Claim 9, wherein the antenna assembly further comprises a reflection device; wherein, the first radiating element array and the second radiating element array are mounted on a first face of the reflecting device, and the active radio is mounted on a second face of the reflection device opposite the first face, and
preferably the first radiating element array is arranged in a first area on the first face of the reflection device and the second radiating element array is arranged in a second area on the first face of the reflection device.

11. A base station antenna as described in any of Claims 8 to 10, wherein the base station antenna further comprises an electromagnetic seal that is configured to seal at least the circuit portion of the connection device,
wherein preferably the electromagnetic seal comprises a first electromagnetic seal and a second electromagnetic seal removably joined together and a housing cavity that is located between the first electromagnetic seal and the second electromagnetic seal to house at least the circuit portion of a connection device.

12. A base station antenna as described in any of Claims 8 to 11, wherein at least two first radiating elements in the first radiating element array are connected to a same first port,
wherein the first radiating elements are preferably connected to the same first port are located in a same column of the first radiating element array.

13. A base station antenna as described in any of Claims 8 to 12, wherein the antenna assembly also comprises a first connector, and the connection device also comprises a third connector connected to the first connector so that the connection device is removably connected to the antenna assembly,
wherein preferably at least one of the first connector, the second connector, the third connector, and the four connector is a push-pull connector.

14. A base station antenna as described in any of Claims 8 to 13, wherein the active radio also comprises a second connector, and the connection device also comprises a fourth connector connected to the second connector so that the connection device is removably connected to the radio,
wherein preferably at least one of the first connector, the second connector, the third connector, and the four connector is a push-pull connector.

15. A base station antenna as describe in any of Claims 8 to 14, wherein an active module comprising the first radiating element array and the active radio is configured for 5G communication, and a passive module comprising the second radiating element array is configured for 4G communication.
